# EUROPÄISCHE PATENTSCHRIFT

(11) **EP 1 366 962 B1**
(45) Veröffentlichungstag und Bekanntmachung des Hinweises auf die Patenterteilung: **10.08.2005**
(21) Anmeldenummer: 03009840.4
(22) Anmeldetag: 13.05.2003
(51) Int. Cl.: B60R 21/26

(54) **Gasgenerator für einen Airbag**
Gas generator for an airbag
Générateur de gaz pour coussin gonflable

(30) Priorität: 21.05.2002 DE 20207862 U
(43) Veröffentlichungstag der Anmeldung: 03.12.2003
(73) Patentinhaber: TRW Airbag Systems GmbH, 84544 Aschau am Inn (DE)
(72) Erfinder: Ruckdeschel, Rolf, 87645 Schwangau (DE)
(74) Vertreter: Sulzbach, Werner, Dipl.-Chem. Dr.

(56) Entgegenhaltungen:
- EP-A- 0 496 488
- EP-A- 0 995 645
- DE-A- 4 310 853
- DE-A- 19 603 703
- US-A- 4 109 578
- US-A- 5 533 754

## Beschreibung

Die Erfindung betrifft einen Gasgenerator zur Verwendung in einem Fahrzeuginsassenrückhaltesystem, mit einem schlauchförmigen Gehäuse aus einem druckfesten Material und einem in das Gehäuse eingebrachten Treibstoffstrang, wobei der Treibstoffstrang mit einer den Treibstoffstrang umgebenden Hülle versehen ist.

Ein derartiger schlauchförmiger Gasgenerator ist bereits aus der DE-A1 100 09 417 bekannt. Dieser Schlauchgasgenerator weist axial verlaufende Kanäle auf, die durch einen im Querschnitt kreuzförmigen Treibsatz mit Zentralbohrung gebildet sind, wobei der Treibsatz von einem Schrumpfschlauch umgeben ist. Der Schrumpfschlauch kann auch zur Verdämmung auf der Außenseite des schlauchförmigen Gehäuses angeordnet sein.

Die EP 0 995 645 A2 beschreibt einen schlauchförmigen Gasgenerator bei dem ein mit radial verlaufenden Fortsätzen versehener Treibstoffstrang in ein schlauchförmiges Gehäuse aus druckfestem Material eingeschoben ist, wobei sich die radialen Fortsätze an die Innenwand des Gehäuses anlegen. Durch die spezielle Geometrie des Treibstoffstrangs entstehen somit zwischen den jeweiligen radialen Fortsätzen in axialer Richtung verlaufende Kanäle zur Weiterleitung der von einem Zündelement erzeugten Druckwelle. Um einen möglichst vollständigen Abbrand des Festtreibstoffs sicherzustellen, sind die in das Gehäuse eingebrachten Bohrungen wenigstens teilweise verdämmt.

In der DE-A1 39 32 576 ist ein Gaserzeuger für einen Gasgenerator zum Ausstoßen von Munition oder zum Befüllen von Airbags beschrieben, der einen langsam abbrennenden Festtreibstoff in Schlauch- oder Strangform und eine an einer Längsseite des Festtreibstoffs anliegenden Sprengstoffbeschichtung aufweist. Der Festtreibstoff kann eine hohlzylindrische Form aufweisen, so daß sich im Inneren des Treibstoffstrangs ein axial verlaufender Kanal ausbildet. Die Sprengstoffbeschichtung liegt dann innerhalb dieses Kanals. Alternativ dazu ist vorgesehen, den Festtreibstoff mit einer Hülle zu versehen. In diesem Fall ist der Querschnitt des Festtreibstoffs sternförmig und die axialen Kanäle verlaufen zwischen den einzelnen Fortsätzen des Treibstoffstrangs.

Die für die Verwendung in Fahrzeuginsassen-Rückhaltesystemen vorgesehenen Schlauchgasgeneratoren müssen Reaktionszeiten im Bereich von wenigen Millisekunden aufweisen. Hierzu muß ein in kürzester Zeit und vollständig verlaufender Treibstoffabbrand gewährleistet sein. Es ist daher sicherzustellen, daß der Treibstoff über die gesamte Länge des Gasgenerators möglichst gleichzeitig gezündet wird. Die Anzündung erfolgt zumeist über eine von einem Zündelement ausgelöste Gasdruckwelle, die sich längs der in axialer Richtung verlaufenden Kanäle im Schlauchgasgenerator fortpflanzen kann. Zum Ausgleich von Energieverlusten der Druckwelle und zur Sicherstellung einer gleichmäßigen Anzündung kann der Treibstoff noch mit einer Sprengstoffbeschichtung versehen sein, die durch die Druckwelle aktiviert wird.

Aufgrund dieses besonderen Anzündmechanismus für Schlauchgasgeneratoren wird üblicherweise die Ausbildung von entlang des Treibstoffstrangs in axialer Richtung verlaufenden Kanälen vorgeschlagen. Zur Ausbildung dieser Kanäle mußte bisher auf komplizierte Treibstoffgeometrien zurückgegriffen werden. Da die Stabilität der Treibstoffgeometrie über die Lebensdauer des Fahrzeugs sichergestellt sein muß, kann auch nicht auf beliebige pyrotechnische Treibsätze zurückgegriffen werden. So wird beispielsweise in der EP-A2 995 645 die Verwendung eines faserverstärkten pyrotechnischen Treibstoffs als vorteilhaft angesehen. Die in der DE 39 32 576 A1 beschriebene Ausführungsform eines hohlzylindrischen Treibstoffstrangs mit innenliegender Sprengstoffbeschichtung ist technisch nicht realisierbar und führt zu unzureichenden Abbrandeigenschaften.

Die Erfindung schafft demgegenüber einen einfach aufgebauten und kostengünstig herstellbaren Schlauchgasgenerator, zu dessen Herstellung auf bekannte Techniken zurückgegriffen werden kann. Erfindungsgemäß wird hierzu ein Gasgenerator, insbesondere zur Verwendung in einem Fahrzeuginsassenrückhaltesystem, mit einem schlauchförmigen Gehäuse aus einem druckfesten Material und einem in das Gehäuse eingebrachten Treibstoffstrang bereitgestellt, wobei der Treibstoffstrang mit einer den Treibstoffstrang umgebenden Hülle versehen ist, und der dadurch gekennzeichnet ist, daß die Hülle formstabil ist und im wesentlichen an der gesamten Außenfläche des Treibstoffstrangs anliegt, wobei die Hülle so ausgebildet ist, daß sie sich bei einer Druckerhöhung aufweitet und an eine Innenfläche des Gehäuses anlegt.

Gemäß der Erfindung können somit relativ einfache Strangprofile für den Treibstoff verwendet werden. Die Weiterleitung der bei einer Aktivierung des Schlauchgasgenerators von einem Zündelement erzeugten Druckwelle wird durch die Fähigkeit der Hülle sichergestellt, sich bei einer Druckerhöhung aufzuweiten und die Treibstoffoberfläche freizulegen. Es muß deshalb nicht mehr auf das Vorhandensein von entlang des Treibstoffstrangs verlaufenden axialen Kanälen geachtet werden. Die Hülle selbst kann sowohl als den Treibstoff schützende Feuchtigkeitssperre als auch als eine die Druckerhöhung im Gasgeneratorgehäuse begünstigende Verdämmung angesehen werden und vereint somit beide Funktionen in einem Bauteil, das äußerst preisgünstig zu fertigen ist. Durch die Umhüllung gewinnt der Treibstoffstrang außerdem an Festigkeit, so daß er sich leicht in das schlauchförmige Gehäuse einführen läßt.

Zur Erhöhung der Druckfestigkeit kann das schlauchförmige Gehäuse aus mehreren Schichten aufgebaut sein. Bevorzugt weist das Gehäuse eine Innenschicht sowie eine Außenschicht aus Kunststoff sowie eine, über haftvermittelnde Zwischenschichten mit der Innenschicht und der Außenschicht verbundene Mittelschicht aus Aluminium auf. Ein derartiger Schichtaufbau gewährleistet eine besondere Druckfestigkeit bei gleichzeitiger Flexibilität. Das mehrschichtige Gehäuse ist durch Koextrusion der genannten Materialien herstellbar. Das Verhältnis von Länge zu Durchmesser des Gehäuses beträgt mindestens 10, bevorzugt mindestens 50 und besonders bevorzugt mindestens 100.

Der Treibstoffstrang ist bevorzugt im Querschnitt kreisringförmig, d. h. der Strang ist als Hohlzylinder ausgebildet. Die Herstellung derartiger hohlzylindrischer Festtreibstoffe durch Extrusion ist bereits bekannt und ohne technische Schwierigkeiten möglich. Alternativ dazu kann der Treibstoffstrang jedes beliebige Profil aufweisen, beispielsweise zylindrisch oder kreiszylindrisch sein, wobei komplexe Geometrien weniger bevorzugt sind. Zur Herstellung des Treibstoffstrangs kann auf bekannte pyrotechnische Festtreibstoffe zurückgegriffen werden, wie sie beispielsweise in der EP-A2 995 645 beschrieben sind. Auch die Verwendung der aus der DE-A1 44 46 976 bekannten Komposittreibstoffe aus einem thermoplastischen Bindemittel, gegebenenfalls einem Weichmacher und einem Oxidator ist möglich. Die Verwendung dieser Komposittreibstoffe ist aufgrund ihrer höheren Elastizität vorteilhaft. Für die Zwecke der Erfindung kann der Treibstoffstrang auch aus einzelnen, mindestens etwa 3 cm langen Abschnitten bestehen.

Der Treibstoffstrang kann auf wenigstens einem Teil seiner Außenfläche, die der Hülle benachbart ist, mit einer Beschichtung aus einer Anzündmischung versehen sein. Als Anzündmischung ist beispielsweise ein aluminisiertes Gemisch aus Bor und Kaliumnitrat verwendbar. Die Anzündmischung wird durch die vom Zünder erzeugte Gasdruckwelle aktiviert und gewährleistet eine vollständige Anzündung des Treibstoffstrangs über die gesamte Länge des Schlauchgasgenerators.

Die Hülle wird vorzugsweise aus einer dünnen Metallfolie gebildet, die bis zu etwa 0,1 mm, bevorzugt zwischen 0,02 mm und 0,05 mm dick sein kann. Alternativ dazu kann auch eine Kunststoffolie verwendet werden, die bevorzugt mit einer Metallbeschichtung als Feuchtigkeitssperre versehen ist. Besonders vorteilhaft wird die Hülle nach dem Einbringen des Treibstoffstrangs an ihren Seitenrändern verschweißt. Zusätzlich kann der Zwischenraum zwischen Treibstoffstrang und Hülle wenigstens teilweise evakuiert sein. Bei dieser Ausführungsform wird der von dem Zündelement erzeugten Druckwelle ein nur geringer Widerstand entgegengesetzt. Energieverluste durch Abkühlung und Verdrängung eines Luftpolsters können somit weitgehend vermieden werden.

Die Hülle weist weiterhin an ihrer Längsseite wenigstens einen seitlich abstehenden flachgedrückten Abschnitt auf. Mit diesem Abschnitt wird ein einfaches Mittel zur Aufweitung der Hülle beim Durchgang der Druckwelle zur Anzündung des Treibstoffstrangs bereitgestellt. Die Gesamtfläche der Hülle entspricht vorzugsweise der Innenfläche des Gasgeneratorgehäuses, so daß die Hülle selbst nicht aus einem dehnbaren Material gebildet sein muß und trotzdem eine sichere Verdämmung bei Aktivierung des Gasgenerators gewährleistet. Die Verdämmung führt zu einem Druckanstieg im Inneren des Gehäuses und damit zu einem schnelleren, kontrollierten Treibstoffabbrand.

Besonders bevorzugt weist die Hülle zwei im wesentlichen gegenüberliegende und seitlich abstehende flachgedrückte Abschnitte auf, die sich im wesentlichen über die gesamte Länge der Hülle erstrecken können. Diese Abschnitte können so gebogen werden, daß sie sich nach dem Einschieben des von der Hülle umgebenen Treibstoffstrangs in das Gehäuse an der Innenfläche des Gehäuses abstützen. Damit ist der Treibstoffstrang aufgrund der Formstabilität der Hülle unter Umgebungsbedingungen sicher im Gehäuse fixiert und das Auftreten von Rasselgeräuschen kann vermieden werden.

Vorteilhaft ist, wenn die Hülle einen flachgedrückten Abschnitt aufweist, der mindestens einmal um den gesamten Umfang des Treibstoffstrangs gelegt ist. Wickelt man den flachgedrückten Abschnitt so, daß er an der Innenfläche des Generatorgehäuses anliegt, so wird damit eine einfache und sichere Fixierung des Treibstoffstrangs im Gehäuse erreicht. Ein einlagiger flachgedrückter Abschnitt, der einmal um den gesamten Umfang des Treibstoffstrangs gelegt wird, bildet eine zweilagige Hülle um den Treibstoffstrang aus. Ein zweilagiger flachgedrückter Abschnitt, der einmal um den gesamten Umfang des Treibstoffstrangs gelegt wird, bildet eine dreilagige Hülle um den Treibstoffstrang aus.

Mit der Erfindung wird somit ein einfach aufgebauter und preisgünstiger Schlauchgasgenerator geschaffen, der ohne Rückgriff auf komplizierte Treibstoffgeometrien eine sichere Anzündbarkeit gewährleistet und aufgrund der Ummantelung des Treibstoffs außerdem eine hohe Funktionssicherheit bietet.

Weitere Merkmale und Vorteile der Erfindung ergeben sich aus der nachfolgenden Beschreibung einer bevorzugten Ausführungsform und der Zeichnung. In der Zeichnung zeigt
- Figur 1 einen Querschnitt durch eine erste Ausführungsform des erfindungsgemäßen Schlauchgasgenerators;
- Figur 2 ein Detail des Schlauchgenerators von Figur 1 im Querschnitt;
- Figuren 3a und 3b einen Querschnitt durch eine zweite Ausführungsform des erfindungsgemäßen Schlauchgasgenerators; und
- Figuren 4a und 4b einen Querschnitt durch eine dritte Ausführungsform des erfindungsgemäßen Schlauchgasgenerators.

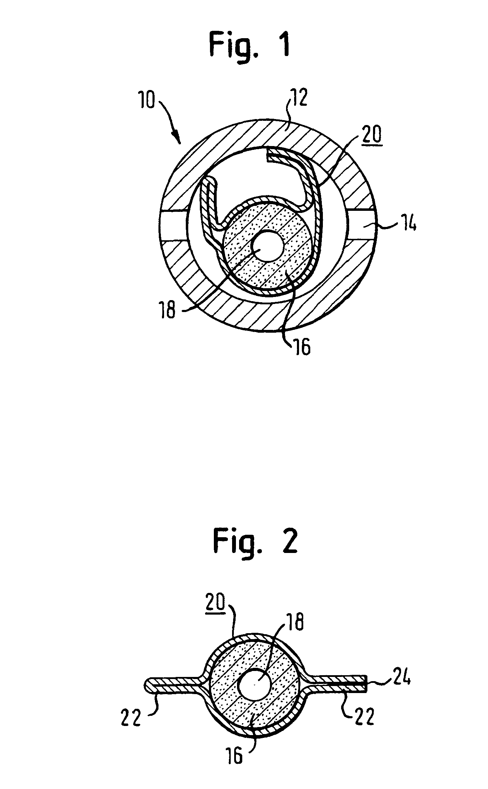

Mit bezug auf die Figuren 1 und 2 ist ein Gasgenerator 10 mit einem schlauchförmigen Gehäuse 12 gezeigt, welches aus einem druckfesten Material besteht und hier aus einem einzigen Werkstoff aufgebaut ist. Es können jedoch auch mehrschichtige Gehäuse verwendet werden, beispielsweise können eine innere Schicht und eine äußere Schicht aus einem Kunststoff sowie eine mittlere Schicht aus Aluminium vorgesehen sein, die miteinander verbunden und beispielsweise durch Koextrusion hergestellt sind.

In das Gehäuse 12 sind Bohrungen 14 für den Gasauslaß eingebracht. Wenigstens ein Teil der Bohrungen kann auf ihrer Innenseite mit einer Verdämmung oder Membran versehen sein. Bevorzugt sind die Bohrungen jedoch offen. An einer Stirnseite des Gehäuses 12 ist ein herkömmliches Zündelement (hier nicht gezeigt) angeordnet, welches bei Aktivierung des Gasgenerators eine Gasdruckwelle erzeugt.

In das Gehäuse 12 ist ein zylindrischer Treibstoffstrang 16 eingebracht. Bei der hier dargestellten Ausführungsform hat der Treibstoffstrang einen kreisringförmigen Querschnitt, d. h. der Strang ist als Hohlzylinder mit einer Zentralbohrung 18 ausgebildet.

Der Treibstoffstrang 16 ist von einer unter Umgebungsbedingungen formstabilen Hülle 20, beispielsweise einer dünnen Metallfolie oder Kunststoffolie umgeben. Die Schichtstärke der Hülle kann zwischen 0,1 und 0,5 mm betragen. Die Hülle besteht vorzugsweise aus Aluminium oder einer metallbeschichteten Kunststoffolie.

Die Hülle 20 liegt im wesentlichen an der gesamten Außenfläche des Treibstoffstrangs 16 an. Dies bedeutet, daß der Hauptteil der Umfangsfläche des Treibstoffstrangs 16 mit der Hülle in Kontakt steht und von dieser gehalten oder gestützt wird. Bei der hier gezeigten Ausführungsform weist die Hülle an ihrer Längsseite zwei im wesentlichen gegenüberliegende und seitlich abstehende flachgedrückte Abschnitte 22 auf, die sich hier im wesentlichen über die gesamte Länge der Hülle 20 erstrecken. Zum Einschieben des von der Hülle umgebenen Treibstoffstrangs 16 in das Gehäuse 12 werden die seitlichen Abschnitte 22 so gebogen, daß sie sich an der Innenfläche des Gehäuses abstützen. In vorteilhafter Weise können die seitlichen Abschnitte federnd elastisch an der Innenfläche des Gehäuses 12 anliegen und somit den Treibstoffstrang 16 sicher im Gehäuse 12 fixieren.

Bei einer besonderen Ausführungsform ist vorgesehen, daß die den Treibstoffstrang 16 umgebende Hülle 20 an ihren Seitenrändern verschweißt und, besonders bevorzugt, wenigstens teilweise evakuiert ist. Insbesondere kann eine Schweißnaht 24 im Bereich eines der seitlich abstehenden Abschnitte ausgebildet sein.

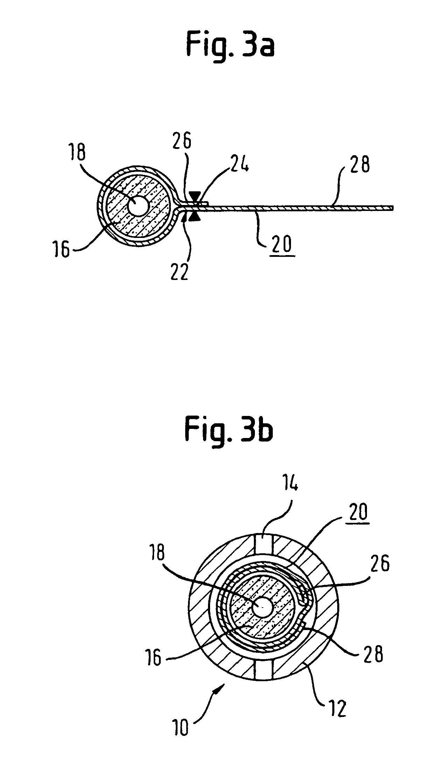

In der in den Figuren 3a und 3b gezeigten Ausführungsform wird die Hülle 20 zuerst einmal um den Treibstoffstrang 16 gelegt und bildet dabei ein kurzes Ende 26 und ein langes Ende 28 der Hülle. Das kurze Ende 26 und das lange Ende 28 der Hülle 20 sind mittels der Schweißnaht 24 miteinander verbunden (Figur 3a). Das lange Ende 28 bildet einen flachen Abschnitt 22, dessen Länge gleich dem Außenumfang der Hülle 20 ist, so daß es bei einem einmaligen Umwickeln der Hülle 20 des Treibstoffstrangs 16 nahe der Schweißnaht 24 endet (Figur 3b) und dabei eine zweilagige Hülle 20 um den Treibstoffstrang 16 ausbildet.

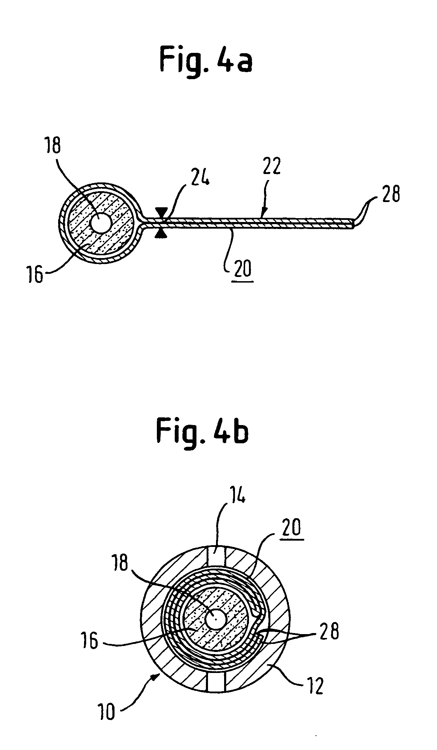

Die Figuren 4a und 4b zeigen eine weitere Ausführungsform, bei der die Hülle 20 in einem ersten Schritt ebenfalls einmal um den Treibstoffstrang 16 gelegt ist, wobei zwei lange Enden 28 ausgebildet werden. Die zwei langen Enden 28 sind mittels der nahe am Treibstoffstrang 16 liegenden Schweißnaht 24 miteinander verbunden (Figur 4a). Die langen Enden 28 bilden einen flachgedrückten Abschnitt 22 aus, dessen Länge gleich dem Außendurchmesser der Hülle 20 ist. Bei einem einmaligem Umwickeln des Treibstoffstrangs 16 mit dem flachgedrückten Abschnitt 22 wird eine dreilagige Hülle 20 um den Treibstoffstrang ausgebildet (Figur 4b).

Sobald ein im Fahrzeug angeordneter Sensor einen Fahrzeugunfall feststellt, wird über ein elektrisches Signal das an einer Stirnseite des Gasgenerators 10 angeordnete Zündelement aktiviert. Dieses Zündelement erzeugt eine Gasdruckwelle, die durch die Hülle 20 geleitet wird und diese so aufweitet, daß sich die Hülle 20 an die Innenfläche des Gehäuses 12 anlegt und damit die Bohrungen 14 verdämmt.

Die Gasdruckwelle führt außerdem zu einer Anzündung des Treibstoffstrangs 16 entlang seiner Außenfläche. Zur Sicherstellung einer sicheren Anzündung und zum Ausgleich von Energieverlusten bei der Durchleitung der Gasdruckwelle kann der Treibstoffstrang an seiner Außenfläche wenigstens teilweise mit einer temperatur- oder druckempfindlichen Anzündmischung beschichtet sein. Die Anzündmischung ist beispielsweise ein Gemisch aus einem feinen Metallpulver und einem Oxidator, wie Bor und Kaliumnitrat oder Aluminium und Kaliumperchlorat. Vorzugsweise ist jedoch der Treibstoff selbst ausreichend empfindlich, um eine sichere Anzündung zu gewährleisten.

Der beginnende Treibstoffabbrand führt zu einer Druckerhöhung im Gehäuse, die einerseits den weiteren Treibstoffabbrand fördert und andererseits ein Aufreißen der Hülle 20 im Bereich der Bohrungen 14 bewirkt. Hierdurch stellt sich ein Gleichgewichtsdruck der durch den Abbrand des Treibstoffstrangs 22 erzeugten Gasmenge und der durch die Bohrungen 14 abströmenden Gasmasse ein. Die abströmenden Gase aktivieren dann in der benötigten Reaktionszeit von wenigen Millisekunden eine Sicherheitseinrichtung, beispielsweise einen aufblasbaren Gassack, einen Splitterschutz oder einen Kniefänger.

## Patentansprüche

1. Gasgenerator (10) zur Verwendung in einem FahrzeuginsassenRückhaltesystem, mit einem schlauchförmigen Gehäuse (12) aus einem druckfesten Material und einem in das Gehäuse (12) eingebrachten Treibstoffstrang (16), wobei der Treibstoffstrang mit einer den Treibstoffstrang umgebenden Hülle (20) versehen ist, **dadurch gekennzeichnet, daß** die Hülle (20) formstabil ist und im wesentlichen an der gesamten Außenfläche des Treibstoffstrangs (16) anliegt, wobei die Hülle so ausgebildet ist, daß sie sich bei einer Druckerhöhung aufweitet und an eine Innenfläche des Gehäuses (12) anlegt.

2. Gasgenerator nach Anspruch 1, **dadurch gekennzeichnet, daß** das schlauchförmige Gehäuse (12) aus mehreren Schichten aufgebaut ist.

3. Gasgenerator nach Anspruch 1 oder 2, **dadurch gekennzeichnet, daß** das Gehäuse (12) eine Innenschicht sowie eine Außenschicht aus Kunststoff sowie eine mit der Innenschicht und der Außenschicht verbundene mittlere Schicht aus Aluminium aufweist.

4. Gasgenerator nach einem der vorhergehenden Ansprüche, **dadurch gekennzeichnet, daß** der Treibstoffstrang (16) zylindrisch, insbesondere hohlkreiszylindrisch, ist.

5. Gasgenerator nach einem der vorhergehenden Ansprüche, **dadurch gekennzeichnet, daß** der Treibstoffstrang (16) auf wenigstens einem Teil seiner Außenfläche mit einer Beschichtung aus einer Anzündmischung versehen ist.

6. Gasgenerator nach Anspruch 5, **dadurch gekennzeichnet, daß** die Anzündmischung ein Gemisch aus Bor und Kaliumnitrat oder Aluminium und Kaliumperchlorat ist.

7. Gasgenerator nach einem der vorhergehenden Ansprüche, **dadurch gekennzeichnet, daß** die Hülle (20) an ihrer Längsseite wenigstens einen seitlich abstehenden, flachgedrückten Abschnitt (22) aufweist.

8. Gasgenerator nach Anspruch 7, **dadurch gekennzeichnet, daß** zwei im wesentlichen gegenüberliegende und seitlich abstehende, flachgedrückte Abschnitte (22) vorgesehen sind.

9. Gasgenerator nach Anspruch 7 oder 8, **dadurch gekennzeichnet, daß** sich die flachgedrückten Abschnitte (22) im wesentlichen über die gesamte Länge der Hülle (20) erstrecken.

10. Gasgenerator nach einem der Ansprüche 7 bis 9, **dadurch gekennzeichnet, daß** sich der oder die flachgedrückten Abschnitte (22) an der Innenfläche des Gehäuses (12) abstützen.

11. Gasgenerator nach einem der Ansprüche 1 bis 6, **dadurch gekennzeichnet, daß** die Hülle (20) einen flachgedrückten Abschnitt (22) aufweist, der mindestens einmal um den gesamten Umfang des Treibstoffstrangs (16) gelegt ist.

12. Gasgenerator nach Anspruch 11, **dadurch gekennzeichnet, daß** der flachgedrückte Abschnitt (22) einlagig ist, um eine zweilagige Hülle (20) um den Treibstoffstrang (16) auszubilden.

13. Gasgenerator nach Anspruch 11, **dadurch gekennzeichnet, daß** der flachgedrückte Abschnitt (22) zweilagig ist, um eine dreilagige Hülle (20) um den Treibstoffstrang (16) auszubilden.

14. Gasgenerator nach einem der vorhergehenden Ansprüche, **dadurch gekennzeichnet, daß** die Hülle (20) aus einer Metallfolie gebildet ist.

15. Gasgenerator nach einem der Ansprüche 1 bis 13, **dadurch gekennzeichnet, daß** die Hülle (20) aus einer Kunststoffolie gebildet ist.

16. Gasgenerator nach Anspruch 15, **dadurch gekennzeichnet, daß** die Kunststoffolie metallbeschichtet ist.

17. Gasgenerator nach einem der vorhergehenden Ansprüche, **dadurch gekennzeichntet, daß** die den Treibstoffstrang (16) umgebende Hülle (20) verschweißt und wenigstens teilweise evakuiert ist.

## Claims

1. A gas generator (10) for use in a vehicle occupant restraint system, comprising a tubular housing (12) of a pressure-resistant material and a propellant strand (16) incorporated in the housing (12), the propellant strand being provided with an envelope (20) surrounding the propellant strand, **characterized in that** the envelope (20) is dimensionally stable and substantially rests against the entire outer surface of the propellant strand (16), the envelope being formed such that in the case of an increase in pressure it expands and rests against an inner surface of the housing (12).

2. The gas generator as claimed in claim 1, **characterized in that** the tubular housing (12) is constructed of a plurality of layers.

3. The gas generator as claimed in claim 1 or 2, **characterized in that** the housing (12) has an inner layer as well as an outer layer of plastic material as well as a middle layer of aluminum connected with the inner and outer layers.

4. The gas generator as claimed in any of the preceding claims, **characterized in that** the propellant strand (16) is cylindrical, in particular hollow circular cylindrical.

5. The gas generator as claimed in any of the preceding claims, **characterized in that** on at least part of its outer surface the propellant strand (16) is provided with a coating of an ignition mixture.

6. The gas generator as claimed in claim 5, **characterized in that** the ignition mixture is a mixture of boron and potassium nitrate or aluminum and potassium perchlorate.

7. The gas generator as claimed in any of the preceding claims, **characterized in that** on its longitudinal side the envelope (20) has at least one laterally protruding flattened portion (22).

8. The gas generator as claimed in claim 7, **characterized in that** two substantially oppositely arranged and laterally protruding flattened portions (22) are provided.

9. The gas generator as claimed in claim 7 or 8, **characterized in that** the flattened portions (22) extend substantially over the entire length of the envelope (20).

10. The gas generator as claimed in any of claims 7 to 9, **characterized in that** the flattened portion(s) (22) is/are supported on the inner surface of the housing (12).

11. The gas generator as claimed in any of claims 1 to 6, **characterized in that** the envelope (20) has a flattened portion (22) which is placed at least once around the total circumference of the propellant strand (16).

12. The gas generator as claimed in claim 11, **characterized in that** the flattened portion (22) has a single layer to form a double layer envelope (20) around the propellant strand (16).

13. The gas generator as claimed in claim 11, **characterized in that** the flattened portion (22) has two layers to form a triple layer envelope (20) around the propellant strand (16).

14. The gas generator as claimed in any of the preceding claims, **characterized in that** the envelope (20) is formed of a metal foil.

15. The gas generator as claimed in any of claims 1 to 13, **characterized in that** the envelope (20) is formed of a plastic film.

16. The gas generator as claimed in claim 15, **characterized in that** the plastic film is metal-coated.

17. The gas generator as claimed in any of the preceding claims, **characterized in that** the envelope (20) surrounding the propellant strand (16) is welded and at least partly evacuated.

## Revendications

1. Générateur de gaz (10) destiné à être utilisé dans un système de retenue de passager de véhicule, comportant un boîtier (12) de forme tubulaire en un matériau résistant à la pression et un boyau de combustible (16) incorporé dans le boîtier (12), le boyau de combustible étant pourvu d'une enveloppe (20) entourant le boyau de combustible, **caractérisé en ce que** l'enveloppe (20) est de forme stable et repose sensiblement sur toute la surface extérieure du boyau de combustible (16), l'enveloppe étant réalisée de telle sorte qu'en cas de montée de pression, elle s'élargit et vient se poser sur une surface intérieure du boîtier (12).

2. Générateur de gaz selon la revendication 1, **caractérisé en ce que** le boîtier (12) de forme tubulaire est constitué par plusieurs couches.

3. Générateur de gaz selon la revendication 1 ou 2, **caractérisé en ce que** le boîtier (12) présente une couche intérieure ainsi qu'une couche extérieure en matière plastique ainsi qu'une couche médiane en aluminium reliée à la couche intérieure et à la couche extérieure.

4. Générateur de gaz selon l'une des revendications précédentes, **caractérisé en ce que** le boyau de combustible (16) est cylindrique, en particulier cylindrique circulaire creux.

5. Générateur de gaz selon l'une des revendications précédentes, **caractérisé en ce que** sur au moins une partie de sa surface extérieure, le boyau de combustible (16) est pourvu d'un revêtement en un mélange d'amorçage.

6. Générateur de gaz selon la revendication 5, **caractérisé en ce que** le mélange d'amorçage est un mélange de bore et de nitrate de potassium ou d'aluminium et de perchlorate de potassium.

7. Générateur de gaz selon l'une des revendications précédentes, **caractérisé en ce que** l'enveloppe (20) présente sur son grand côté au moins un tronçon aplati (22) faisant saillie latéralement.

8. Générateur de gaz selon la revendication 7, **caractérisé en ce qu'**il est prévu deux tronçons aplatis (22), sensiblement opposés et faisant saillie latéralement.

9. Générateur de gaz selon la revendication 7 ou 8, **caractérisé en ce que** les tronçons aplatis (22) s'étendent sensiblement sur toute la longueur de l'enveloppe (20).

10. Générateur de gaz selon l'une des revendications 7 à 9, **caractérisé en ce que** le ou les tronçon(s) aplati(s) (22) prend/prennent appui sur la surface intérieure du boîtier (12).

11. Générateur de gaz selon l'une des revendications 1 à 6, **caractérisé en ce que** l'enveloppe (20) présente un tronçon aplati (22) qui est posé au moins une fois autour de la périphérie totale du boyau de combustible (16).

12. Générateur de gaz selon la revendication 11, **caractérisé en ce que** le tronçon aplati (22) est à une couche pour réaliser une enveloppe (20) à deux couches autour du boyau de combustible (16).

13. Générateur de gaz selon la revendication 11, **caractérisé en ce que** le tronçon aplati (22) est à deux couches pour réaliser une enveloppe (20) à trois couches autour du boyau de combustible (16).

14. Générateur de gaz selon l'une des revendications précédentes, **caractérisé en ce que** l'enveloppe (20) est formée par une feuille métallique.

15. Générateur de gaz selon l'une des revendications 1 à 13, **caractérisé en ce que** l'enveloppe (20) est formée par une feuille de matière plastique.

16. Générateur de gaz selon la revendication 15, **caractérisé en ce que** la feuille de matière plastique est métallisée.

17. Générateur de gaz selon l'une des revendications précédentes, **caractérisé en ce que** l'enveloppe (20) entourant le boyau de combustible (16) est soudée et mise sous vide au moins partiellement.
